# EUROPÄISCHE PATENTANMELDUNG

(11) **EP 0 896 259 A2**
(43) Veröffentlichungstag der Anmeldung: **10.02.1999**
(21) Anmeldenummer: 98114562.6
(22) Anmeldetag: 03.08.1998
(51) Int. Cl.: G03H 1/02, B42D 15/10

(54) **Verfahren und Vorrichtung zur Erzeugung einer Oberflächenstruktur, insbesondere einer holographischen Oberflächenstruktur, auf einem Substrat**

(30) Priorität: 04.08.1997 DE 19733746; 23.01.1998 DE 19802585
(71) Anmelder: HSM Holographic Systems München GmbH, 85652 Ottersberg (DE)
(72) Erfinder: Jongh de, Rudi, 83026 Rosenheim (DE); Podratzki, Bernhard, 63263 Neu-Isenburg (DE)
(74) Vertreter: Zinnecker, Armin, Dipl.-Ing.

(57) **Zusammenfassung**

Ein Verfahren dient zur Erzeugung einer Oberflächenstruktur, insbesondere einer holographischen Oberflächenstruktur, auf einem Substrat. Um auf einfache Weise eine individualisierte Erzeugung der Oberflächenstruktur zu ermöglichen, wird das Substrat (4) mit einer strahlenhärtbaren Substanz, insbesondere einem strahlenhärtbaren Monomer (5) beschichtet. In die Beschichtung wird, beispielsweise durch einen Zylinder (10), ein Prägemuster eingebracht. Das Prägemuster wird mit einem modulierten Belichtungsstrahl (1a, 1b) ausgehärtet.

## Beschreibung

Die Erfindung betrifft ein Verfahren zur Erzeugung einer Oberflächenstruktur, insbesondere einer holographischen Oberflächenstruktur, auf einem Substrat und eine Vorrichtung zur Durchführung eines derartigen Verfahrens.

Die zu erzeugende Oberflächenstruktur ist im allgemeinen eine Reliefstruktur. Auf das Substrat muß eine vorgegebene bzw. definierte Oberflächenstruktur bzw. Reliefstruktur aufgebracht werden. Das Substrat kann dann insbesondere als Matrize (Relief-Master) für die Prägeholographie verwendet werden.

Aufgabe der Erfindung ist es, ein Verfahren und eine Vorrichtung der eingangs angegebenen Art vorzuschlagen, mit denen auf einfache Weise eine individualisierte Erzeugung einer Oberflächenstruktur, insbesondere einer holographischen Oberflächenstruktur ermöglicht wird.

Nach einem ersten Vorschlag wird diese Aufgabe bei einem Verfahren der eingangs angegebenen Art dadurch gelöst, daß das Substrat mit einer strahlenhärtbaren Substanz, insbesondere einem strahlenhärtbaren Monomer beschichtet wird, daß in die Beschichtung ein Prägemuster eingebracht wird und daß das Prägemuster mit einem modulierten Belichtungsstrahl ausgehärtet wird. Bei der strahlenhärtbaren Substanz handelt es sich vorzugsweise um eine flüssige Substanz. Diese Substanz ist vorzugsweise durch elektromagnetische Strahlen, beispielsweise UV-Licht härtbar. Es kann ein regelmäßiges Prägemuster aufgebracht werden. Durch den modulierten Belichtungsstrahl wird die strahlenhärtbare Substanz in denjenigen Bereichen, die von mindestens einem modulierten Belichtungsstrahl erfaßt werden, gehärtet. Es versteht sich, daß der bzw. die Belichtungsstrahlen geeignet sein müssen, die strahlenhärtbare Substanz zu härten.

Vorteilhafte Weiterbildungen sind in den Unteransprüchen beschrieben.

Das Prägemuster wird vorzugsweise durch einen Zylinder aufgebracht. Es kann allerdings auch durch ein ebenes, intermittierend bewegtes Element aufgebracht werden. Der Zylinder kann auf seiner Oberfläche eine regelmäßige Reliefstruktur aufweisen.

Die modulierte Belichtung kann durch einen Scanner, insbesondere durch einen Zeilenscanner, erfolgen. Auch dies ist insbesondere dann von Vorteil, wenn das Prägemuster durch einen Zylinder aufgebracht wird. Die Zeile des Zeilenscanners verläuft dann vorzugsweise parallel zu einer Mantellinie des Prägezylinders bzw. im rechten Winkel zur Vorschubrichtung des Substrats.

Eine weitere vorteilhafte Weiterbildung ist dadurch gekennzeichnet, daß die Belichtung durch ein LCD erfolgt. Das LCD kann von einem PC oder sonstigem Computer angesteuert werden, wodurch auf sehr schnelle und einfache Weise die individuell auszuhärtenden Bereiche der Oberflächenstruktur vorgegeben werden können.

Das Verfahren kann einmal oder mehrmals wiederholt werden. Hierdurch ist es möglich, auf einem Substrat nacheinander mehrere, gegebenenfalls voneinander abweichende Oberflächenstrukturen zu erzeugen, die nebeneinander angeordnet sein können, die sich aber auch überlappen können.

Beispielsweise wird die nicht ausgehärtete Substanz bzw. das nicht ausgehärtete Monomer nach der Belichtung bzw. Aushärtung ausgewaschen.

Eine Vorrichtung zur Erzeugung einer Oberflächenstruktur, insbesondere einer holographischen Oberflächenstruktur, auf einem Substrat, besteht erfindungsgemäß aus einem Zylinder, über den ein mit einer strahlenhärtbaren Substanz, insbesondere einem strahlenhärtbaren Monomer beschichtetes Substrat führbar ist, und einer Belichtungseinrichtung zum Belichten des beschichteten Substrats mit einem modulierten Belichtungsstrahl.

Vorteilhafte Weiterbildungen sind in den weiteren Unteransprüchen beschrieben.

Dem Zylinder ist vorzugsweise eine Beschichtungseinrichtung zum Beschichten des Substrats mit einer strahlenhärtbaren Substanz, insbesondere einem strahlenhärtbaren Monomer vorgeschaltet.

Vorzugsweise ist die Belichtungseinrichtung außerhalb des Zylinders angeordnet. In diesem Fall ist das Substrat für die Strahlen der Belichtungseinrichtung durchsichtig. Die Belichtungseinrichtung kann allerdings auch innerhalb des Zylinders angeordnet sein. In diesem Fall ist die Oberfläche des Zylinders für die Belichtungsstrahlen durchlässig.

Vorzugsweise umfaßt die Belichtungseinrichtung einen Lichtmodulator, beispielsweise einen Scanner, insbesondere einen Zeilenscanner, und/oder ein LCD.

Vorzugsweise sind mehrere Vorrichtungen hintereinander geschaltet. Diese Vorrichtungen werden von dem Substrat nacheinander durchlaufen. Hierdurch können auf dem Substrat nacheinander mehrere gegebenenfalls verschiedene Oberflächenstrukturen erzeugt werden, die sich dann nebeneinander und/oder überlappend auf dem Substrat befinden.

Beispielsweise ist dem Zylinder eine Wascheinheit zum Auswaschen der nicht ausgehärteten Substanz bzw. des nicht ausgehärteten Monomers nachgeschaltet.

Die der Erfindung zugrundeliegende Aufgabe wird bei einem Verfahren der eingangs angegebenen Art nach einem zweiten Vorschlag, für den selbständig Schutz begehrt wird, dadurch gelöst, daß eine strahlenhärtbare Substanz, insbesondere ein strahlenhärtbares Monomer entsprechend der zu erzeugenden Oberflächenstruktur auf das Substrat aufgebracht wird und die Substanz mit einem Belichtungsstrahl belichtet wird. In diesem Fall wird also die strahlenhärtbare Substanz nicht auf den gesamten Oberflächenbereich des Substrats aufgebracht, sondern nur auf demjenigen Bereich, auf dem sich später die Oberflächenstruktur befinden soll. Dort wird die Substanz dann belichtet und damit gehärtet. Ein Vorteil dieser Verfahrensweise besteht darin, daß ein Auswaschen einer flüssigen Substanz an denjenigen Stellen, an denen sich keine Oberflächenstruktur befinden soll, nicht erforderlich ist.

Die beiden erfindungsgemäßen Verfahren unterscheiden sich durch folgendes: Nach dem erstgenannten Verfahren wird die strahlenhärtbare Substanz zunächst auf dem gesamten Substrat aufgebracht oder aber doch zumindest auf Bereichen des Substrates, die größer sind als der Bereich, auf dem sich später die Oberflächenstruktur befinden soll. Die Oberflächenstruktur wird dann dadurch hergestellt, daß nur diejenigen Bereiche, auf denen später die Oberflächenstruktur erscheinen soll, mit einem Belichtungsstrahl belichtet werden. Demgegenüber wird beim zweiten Verfahren die strahlenhärtbare Substanz von Anfang an nur dort auf das Substrat aufgebracht, wo sich später die Oberflächenstruktur befinden soll. Dabei muß der Aushärtestrahl nicht modulierbar sein (sofern kein zusätzliches Hologramm belichtet wird).

Vorteilhafte Weiterbildungen sind in den weiteren Unteransprüchen beschrieben.

Die strahlenhärtbare Substanz bzw. das strahlenhärtbare Monomer kann durch gezieltes Aufbringen, beispielsweise Aufsprühen oder Aufdrucken oder ein anderes Verfahren auf das Substrat aufgebracht werden. Nach einer weiteren vorteilhaften Weiterbildung kann die strahlenhärtbare Substanz bzw. das strahlenhärtbare Monomer auf einen Zylinder mit Oberflächenrelief und nach Aushärtung durch Bestrahlung von dort auf das Substrat aufgebracht werden. In diesem Fall wird die strahlenhärtbare Substanz bzw. das strahlenhärtbare Monomer beispielsweise durch Inkjet-Düsen auf den Prägezylinder individuell aufgebracht. Für die Aushärtung ist lediglich gleichförmige unmodulierte Strahlung notwendig.

Das Verfahren kann einmal oder mehrmals wiederholt werden, um gegebenenfalls verschiedene Oberflächenstrukturen auf das Substrat aufzubringen, und zwar auf Bereichen des Substrats, die nebeneinander liegen oder sich überlappen.

Eine Vorrichtung zur Erzeugung einer Oberflächenstruktur, insbesondere einer holographischen Oberflächenstruktur, auf einem Substrat, besteht nach dem zweiten Vorschlag der Erfindung aus einer Aufbringeinrichtung zum Aufbringen einer strahlenhärtbaren Substanz, insbesondere eines strahlenhärtbaren Monomers entsprechend der zu erzeugenden Oberflächenstruktur auf das Substrat und einer Belichtungseinrichtung zum Belichten der Substanz.

Vorteilhafte Weiterbildungen sind in den weiteren Unteransprüchen beschrieben.

Die Vorrichtung umfaßt vorzugsweise einen Zylinder. Die Aufbringeinrichtung umfaßt beispielsweise Inkjet-Düsen zum Aufbringen der strahlenhärtbaren Substanz bzw. des strahlenhärtbaren Monomers auf das Substrat und/oder auf den Zylinder. Vorteilhaft ist es, wenn mehrere Vorrichtungen hintereinander geschaltet sind, um gegebenenfalls verschiedene Oberflächenstrukturen auf dem Substrat zu erzeugen, und zwar auf Bereichen des Substrats, die nebeneinander liegen und/oder sich überlappen.

Durch die Erfindung können insbesondere holographische Oberflächenstrukturen erzeugt werden. Es ist allerdings auch möglich, andere Oberflächenstrukturen, beispielsweise optische Gitter, zu erzeugen. Die Oberflächenstrukturen werden in Form des Abformens (Casting) oder Gießens hergestellt.

Ausführungsbeispiele der Erfindung werden nachstehend anhand der beigefügten Zeichnung im einzelnen erläutert. In der Zeichnung zeigt
- Fig. 1: eine Vorrichtung zur Erzeugung einer Oberflächenstruktur auf einem Substrat mit einem Zylinder in einer Seitenansicht,
- Fig. 2: die in Fig. 1 gezeigte Vorrichtung mit zusätzlich einer Beschichtungseinrichtung und einem Zeilenscanner in einer perspektivischen Ansicht,
- Fig. 3: eine Abwandlung der in Fig. 2 gezeigten Vorrichtung mit einem LCD,
- Fig. 4: eine Wascheinheit in einer Seitenansicht,
- Fig. 5: zwei hintereinander geschaltete Vorrichtungen gemäß Fig. 2,
- Fig. 6: eine Vorrichtung zur Erzeugung einer Oberflächenstruktur auf einem Substrat mit Inkjet-Düsen in einer perspektivischen Darstellung und
- Fig. 7: eine Vorrichtung zur Erzeugung einer Oberflächenstruktur auf einem Substrat mit Inkjet-Düsen zum Aufbringen der Oberflächenstruktur auf einen Zylinder in einer perspektivischen Darstellung.

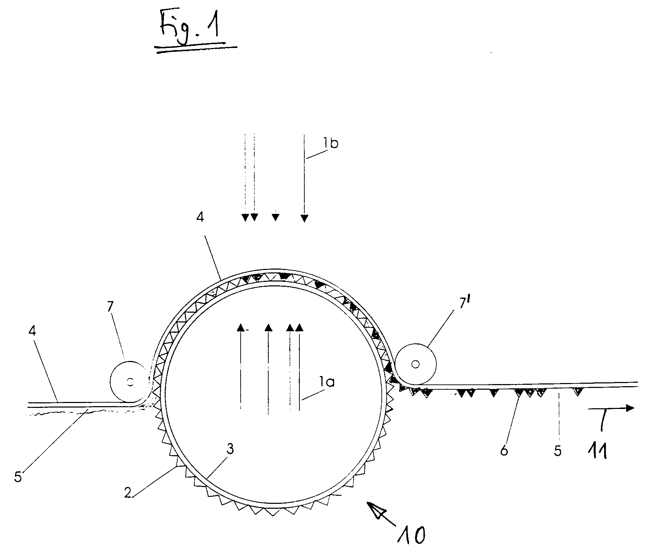

Bei der in Fig. 1 schematisch dargestellten Vorrichtung wird eine Folie 4, die mit einem flüssigen, strahlenhärtbaren Monomer 5 beschichtet ist, einem rotierenden Zylinder 10 zugeführt. Der Zylinder 10 umfaßt eine zylindrische Oberfläche (Zylinderwand) 3, auf deren Außenseite eine Oberflächenstruktur 2 angebracht ist. Beispielsweise handelt es sich um eine Hologrammoberflächenstruktur. Die Folie 4 wird zunächst um eine erste Umlenkwalze 7 geführt. Sie kommt dann mit der Oberflächenstruktur 2 in Kontakt, und zwar derart, daß das flüssige, strahlenhärtbare Monomer 5 auf der der Oberflächenstruktur 2 zugewandten Seite der Folie 4 liegt. Die Vorschubgeschwindigkeit 11 der Folie 4 ist genausogroß wie die Umfangsgeschwindigkeit der Zylinderwand 3. Danach wird die Folie durch eine weitere Umlenkwalze 7' umgelenkt und abtransportiert.

Während sich die Folie 4 in Kontakt mit der Oberflächenstruktur 2 befindet, wird auf der Monomer-Beschichtung 5 der Folie 4 das Prägemuster aufgebracht, nämlich das (negative) Prägemuster der Oberflächenstruktur 2. Dieses Prägemuster wird mit einem modulierten Belichtungsstrahl 1a und/ oder 1b belichtet. Die Belichtung kann durch einen modulierten Belichtungsstrahl 1a von innen erfolgen, also vom Inneren des Zylinders. In diesem Fall muß die Zylinderwand 3 transparent sein. Die Belichtung kann allerdings auch durch einen modulierten Belichtungsstrahl 1b von außen oder von innen erfolgen. Bei der Belichtung von außen soll die Folie 4 transparent sein, bei der Belichtung von innen muß der Prägezylinder transparent sein, um eine Belichtung und Aushärtung des Monomers 5 zu ermöglichen.

Der Belichtungsstrahl 1a und/oder 1b ist derart moduliert, daß nur bestimmte, vorgegebene Bereiche des Prägemusters mit Licht bestrahlt werden. Diese Bereiche sind in Fig. 1 schwarz dargestellt. In diesen Bereichen härtet das Monomer 5 aus. Dadurch bildet sich auf der Folie die vorgegebene Oberflächenstruktur mit durch Belichtung ausgehärtetem Monomer 6. Zwischen den ausgehärteten Bereichen befindet sich noch flüssiges Monomer 5.

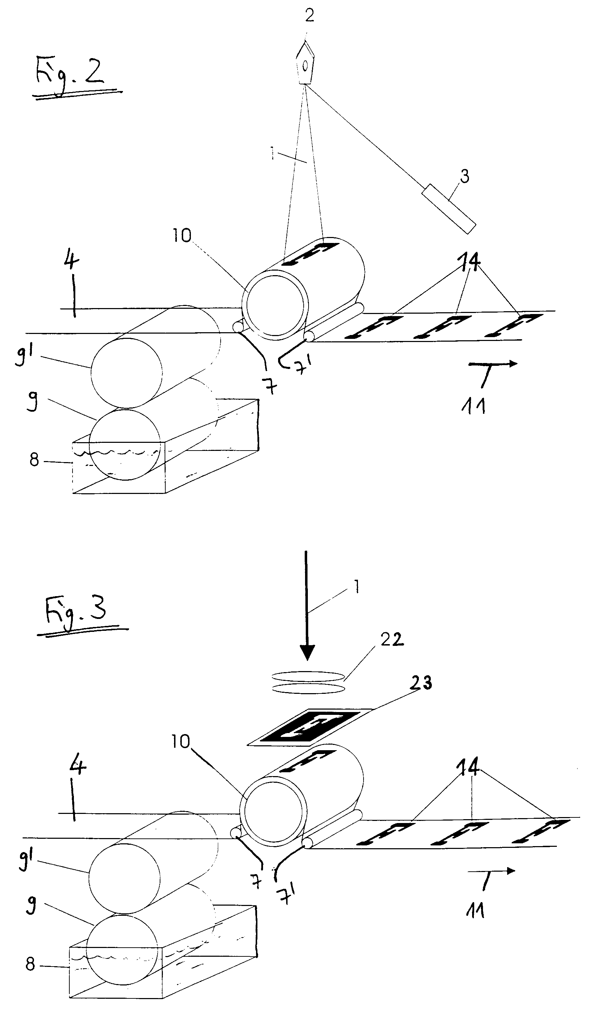

In Fig. 2 ist die dem Zylinder vorgeordnete Beschichtungseinrichtung gezeigt, die aus einem mit flüssigen Monomer gefüllten Behälter 8, einer unteren Auftragswalze 9 und einer oberen Auftragswalze 9' besteht. Die untere Auftragswalze 9 taucht in das flüssige Monomer in dem Behälter 8 ein. Sie rotiert gegen den Uhrzeigersinn und steht mit der oberen Auftragswalze 9' in Kontakt, die im Uhrzeigersinn rotiert und deren Umfangsgeschwindigkeit so groß ist wie die Transportgeschwindigkeit 11 des Films 4.

Bei der Ausführungsform nach Fig. 2 erfolgt die Belichtung mit dem modulierten Belichtungsstrahl 1 durch einen Zeilenscanner 2, der aus einem rotierenden Polygonspiegel besteht und der von der modulierbaren Strahlquelle 3 angestrahlt wird. Die Zeile des Zeilenscanners 2 verläuft parallel zu einer Mantellinie des Zylinders 10. Hierdurch werden Bereiche 14 mit ausgehärtetem Monomer auf die Folie 4 aufgebracht.

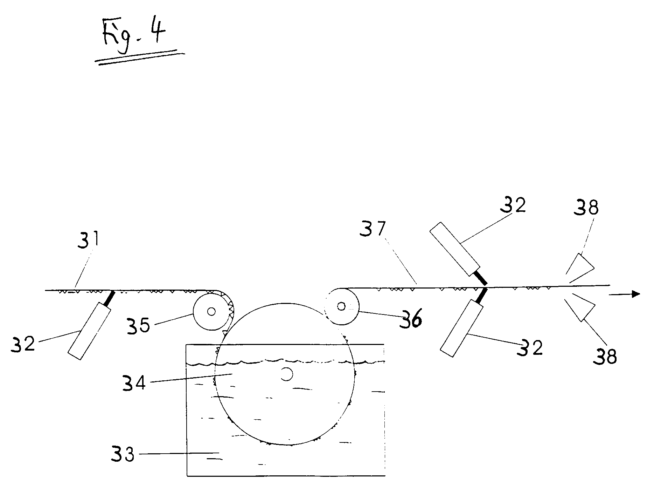

Die in Fig. 3 dargestellte Variante unterscheidet sich von derjenigen nach Fig. 2 dadurch, daß der Zeilenscanner durch eine Belichtungseinrichtung mit einer LCD 23 ersetzt ist, die von einem aufgeweiteten Belichtungsstrahl 1 durch ein Linsensystem 22 bestrahlt wird. Die vorgegebene Oberflächenstruktur wird auf der LCD 23 erzeugt. Der aufgeweitete Belichtungsstrahl 1 wird durch das Linsensystem 22 auf das LCD 23 geleitet und dort moduliert. Das LCD befindet sich über dem Zylinder 10 parallel zu und im Abstand von einer seiner Mantellinien.

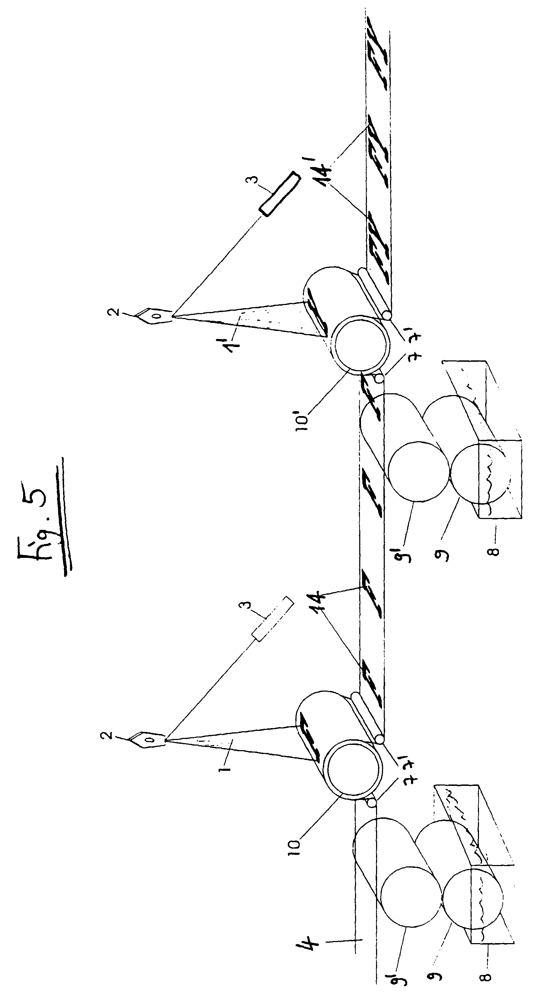

In Fig. 4 ist eine Wascheinheit für das nicht belichtete Monomer gezeigt. Sie besteht aus einer Waschtrommel 34, die in einem Behälter mit Waschlösung 33 rotiert. Die Folie 31, auf der sich Bereiche mit ausgehärtetem Monomer und mit flüssigem Monomer befinden, wird über einen ersten Gummiabstreifer 32 einer Umlenkwalze 35 zugeführt. Von dort gelangt die Folie 31 auf den Außenumfang der Waschtrommel 34, und zwar derart, daß sich die Monomer-Bereiche am Außenumfang befinden. In der Waschlösung 33 wird daraufhin das flüssige Monomer von der Folie 1 entfernt. Die derart gewaschene Folie 31 wird dann nach einer Umschlingung der Waschtrommel 34 durch eine Gummiwalze 36 umgelenkt. Durch die Gummiwalze 36, die sich im Kontakt mit der Waschtrommel 34 befindet, wird gleichzeitig an der Folie 31 noch anhaftendes Lösungsmittel abgequetscht.

Die Folie 37 mit ausgehärtetem Monomer wird anschließend weiteren Gummiabstreifern 32 auf beiden Seiten der Folie 37 zugeführt, die eventuelle Reste von Monomer und/oder Lösungsmittel abstreifen. Hieran schließen sich Heißluftdüsen 38 auf beiden Seiten der Folie 31 an, die noch verbleibende Reste von Monomer und/oder Lösungsmittel wegblasen.

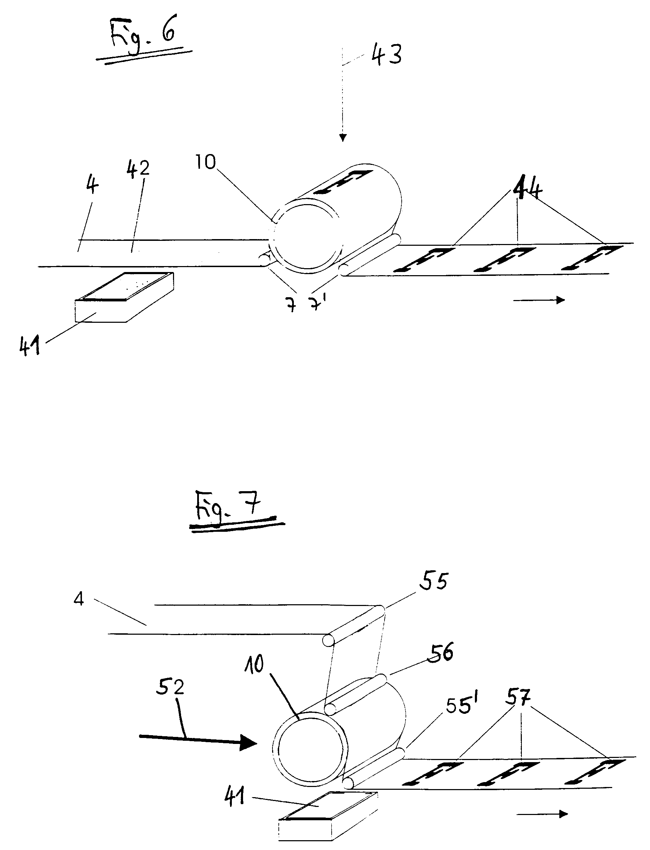

Fig. 5 zeigt zwei hintereinandergeschaltete Vorrichtungen der in Fig. 2 gezeigten Art. Gleiche Teile sind mit gleichen Bezugszeichen versehen, so daß sie nicht erneut beschrieben werden müssen. Durch den ersten Schreibstrahl 1 wird eine erste Oberflächenstruktur 14 auf die Folie 4 aufgebracht. Der zweite Schreibstrahl 1' bringt eine zweite Oberflächenstruktur 14' auf den Film 4 auf. Bei der Ausführungsform nach Fig. 5 liegen die Bereiche 14 und 14' nebeneinander. Sie können sich allerdings auch ganz oder teilweise überlappen.

In den Fig. 6 und 7 sind Ausführungsformen nach der zweiten erfindungsgemäßen Lösung gezeigt. Bei der Ausführungsform nach Fig. 6 wird ein strahlenhärtbares Monomer durch Inkjet-Düsen 41 entsprechend der zu erzeugenden Oberflächenstruktur 44 auf die Folie 4 aufgebracht. Es befindet sich dann auf der Folie 4 als aufgespritztes Monomer 42 in der vorgegebenen Oberflächenstruktur. Durch eine entsprechende Ansteuerung der Inkjet-Düsen 41 wird diese vorgegebene Oberflächenstruktur erzeugt. Während des Durchlaufens des Zylinders 10 wird die Folie 4 mit dem aufgeweiteten Belichtungsstrahl 43 bestrahlt. Hierdurch härtet das an den vorgegebenen Stellen befindliche Monomer aus. Auf den Bereichen 44 ist dann ausgehärtetes Monomer auf der Folie 4 vorhanden.

Die Fig. 7 zeigt eine abgewandelte Ausführungsform, bei der die Inkjet-Düsen 41 das Monomer nicht unmittelbar auf die Folie 4 aufbringen, sondern zunächst auf den mit einer regelmäßigen Oberflächenstruktur bzw. Reliefstruktur versehenen Zylinder 10. Die Inkjet-Düsen 41 sind unter dem Zylinder angeordnet. Nach einer Drehung des Zylinders 10 wird dessen Oberfläche von einem aufgeweiteten Belichtungsstrahl 52 belichtet. Die Inkjet-Düsen 41 haben das Monomer lediglich an den vorbestimmten Stellen, an denen die Oberflächenstruktur 57 erzeugt werden soll, auf den Zylinder 10 aufgebracht. Dort wird das Monomer dann durch den aufgeweiteten Belichtungsstrahl 52 gehärtet. Anschließend wird es auf die Folie 4 übertragen.

Die Folie 4 wird zunächst durch eine Umlenkwalze 55, die sich über dem Zylinder 10 befindet, nach unten umgelenkt. Sie wird durch eine Andruckwalze 56 mit der Oberfläche des Zylinders 10 in Kontakt gebracht. Durch eine weitere Umlenkwalze 55 wird die Folie 4 dann abgeleitet.

Da bei den Ausführungsformen nach Fig. 6 und 7 das Monomer nur an den vorgegebenen Stellen, an denen die Oberflächenstruktur erzeugt werden soll, aufgebracht wird, ist eine Wascheinheit nicht erforderlich.

Durch die Erfindung werden die Kopierbarkeit und die Nachahmung von Sicherheitshologrammen erheblich erschwert. Es ist möglich, auf einfache Weise fälschungserschwerende Mikrosturkturen zu erzeugen. Diese Mikrostrukturen können durch eine Individualisierung wie beispielsweise eine Numerierung, ein Barcode, personelle Abbildungen (bei Ausweisen etc.) und ähnliches erzeugt werden.

Durch die Erfindung wird ein Verfahren und eine Vorrichtung zur individualisierten Übertragung von Oberflächenstrukturen auf transparente und nicht-transparente Substrate ermöglicht. Es ist kein teures holographisches Equipment nötig. Insbesondere kann unter anderem die Belichtung mit einer nicht kohärenten Lichtquelle erfolgen. Die Individualisierung der zu übertragenden Information kann mit geringstmöglichem Aufwand durchgeführt werden, und zwar durch Einsatz bestehender Technologien wie beispielsweise LCD-Displays (Projektoren), modulierte Laser (Laserdrucker), Inkjet-Monomerauftrag (Tintenstrahldrucker), Elektronenstrahl-Scanner (Schweißen, Bohren), elektromechanisch verstellbare Masken, Thermotransfer-Technik (Drucker, Faxgeräte) und/oder elektrostatische Entladung mit Laser-Scanner (Laserdrucker).

Durch eine Kombination bzw. Überlagerung unterschiedlicher Strukturen sind komplizierte Strukturen in einem Arbeitsgang einfach herstellbar. Auch großflächige Strukturen können mit minimalem apparativen Aufwand hergestellt werden. Die Erfindung ermöglicht eine einfache und direkte Erstellung von Relief-Mastern für die Prägeholographie ohne und mit Einsatz von kohärenten Lasern und holographischem Equipment. Durch Beimischen von unterschiedlichen Farbstoffen, Fluoreszenz-Farbstoffen, reversiblen Thermofarbstoffen und/oder ferromagnetischen Substanzen in mikroverkapselter Form (oder auch unmittelbar) zum Monomer werden die Nachahmung oder Fälschung erschwert. Durch eine Mehrfach-Auftragung auf überlappende Bereiche können Erhöhungen bzw. Reliefstrukturen auf dem Substrat erzeugt werden.

Nach der ersten erfindungsgemäßen Lösung wird das Substrat mit einer strahlenhärtbaren Substanz, insbesondere einem strahlenhärtbaren Monomer, beschichtet. Dieser Verfahrensschritt kann allerdings weggelassen werden, wenn für das Verfahren ein bereits vorbeschichtetes Substrat verwendet wird. In diesem Fall wird das Prägemuster auf die Beschichtung des vorbeschichteten Substrats aufgebracht und dieses Prägemuster dann mit dem modulierten oder unmodulierten Belichtungsstrahl belichtet.

Bei der in Fig. 5 gezeigten Mehrfachauftragung von Monomer können Erhöhungen der ausgehärteten Monomerschicht erzeugt werden, wenn sich die Bereiche, die jeweils beschichtet werden überlappen. Diese Erhöhungen können fühlbar oder meßbar sein, wodurch ein zusätzliches Echtheitsmerkmal erzeugt werden kann. Ferner ist es möglich, den ersten Zylinder 10 mit einer ersten Struktur und den zweiten Zylinder 10' mit einer zweiten oder mehreren Strukturen auszustatten. Die Strukturen können einer ersten und einer zweiten Farbe entsprechen.

## Patentansprüche

1. Verfahren zur Erzeugung einer Oberflächenstruktur, insbesondere einer holographischen Oberflächenstruktur, auf einem Substrat,
bei dem das Substrat mit einer strahlenhärtbaren Substanz, insbesondere einem strahlenhärtbaren Monomer (5) beschichtet wird, in die Beschichtung ein Prägemuster eingebracht wird und das Prägemuster mit einem modulierten Belichtungsstrahl (1a, 1b) ausgehärtet wird.

2. Verfahren nach Anspruch 1, dadurch gekennzeichnet, daß das Prägemuster durch einen Zylinder (10) aufgebracht wird.

3. Verfahren nach Anspruch 1 oder 2, dadurch gekennzeichnet, daß die Belichtung von der der Beschichtung abgewandten Seite des Substrats erfolgt.

4. Verfahren nach einem der vorhergehenden Ansprüche, dadurch gekennzeichnet, daß die Belichtung durch einen Scanner, insbesondere durch einen Zeilenscanner (12) erfolgt.

5. Verfahren nach einem der vorhergehenden Ansprüche, dadurch gekennzeichnet, daß die Belichtung durch ein LCD (23) erfolgt.

6. Verfahren nach einem der vorhergehenden Ansprüche, dadurch gekennzeichnet, daß das Verfahren einmal oder mehrmals wiederholt wird.

7. Verfahren nach einem der vorhergehenden Ansprüche, dadurch gekennzeichnet, daß die nicht ausgehärtete Substanz bzw. das nicht ausgehärtete Monomer ausgewaschen wird.

8. Vorrichtung zur Erzeugung einer Oberflächenstruktur, insbesondere einer holographischen Oberflächenstruktur, auf einem Substrat, bestehend aus
einem Zylinder (10), über den ein mit einer strahlenhärtbaren Substanz (5), insbesondere einem strahlenhärtbaren Monomer, beschichtetes Substrat (4) führbar ist, und einer Belichtungseinrichtung (1a, 1b) zum Belichten des beschichteten Substrats mit einem modulierten Belichtungsstrahl.

9. Vorrichtung nach Anspruch 8, dadurch gekennzeichnet, daß dem Zylinder (10) eine Beschichtungseinrichtung (8, 9, 9') zum Beschichten des Substrats mit einer strahlenhärtbaren Substanz, insbesondere einem strahlenhärtbaren Monomer, vorgeschaltet ist.

10. Vorrichtung nach Anspruch 8 oder 9, dadurch gekennzeichnet, daß die Belichtungseinrichtung außerhalb des Zylinders (10) angeordnet ist.

11. Vorrichtung nach einem der Ansprüche 8 bis 10, dadurch gekennzeichnet, daß die Belichtungseinrichtung innerhalb des Zylinders angeordnet ist.

12. Vorrichtung nach einem der Ansprüche 8 bis 11, dadurch gekennzeichnet, daß die Belichtungseinrichtung einen Scanner, insbesondere einen Zeilenscanner (12) umfaßt.

13. Vorrichtung nach einem der Ansprüche 8 bis 12, dadurch gekennzeichnet, daß die Belichtungseinrichtung ein LCD (23) umfaßt.

14. Vorrichtung nach einem der Ansprüche 8 bis 13, dadurch gekennzeichnet, daß mehrere Vorrichtungen hintereinander geschaltet sind.

15. Vorrichtung nach einem der Ansprüche 8 bis 14, dadurch gekennzeichnet, daß dem Zylinder (10) eine Wascheinheit (33, 34) zum Auswaschen der nicht ausgehärteten Substanz bzw. des nicht ausgehärteten Monomers nachgeschaltet ist.

16. Verfahren zur Erzeugung einer Oberflächenstruktur, insbesondere einer holographischen Oberflächenstruktur, auf einem Substrat,
bei dem eine strahlenhärtbare Substanz, insbesondere ein strahlenhärtbares Monomer, entsprechend der zu erzeugenden Oberflächenstruktur (44, 57) auf das Substrat (4) aufgebracht wird
und die Substanz mit einem Belichtungsstrahl (43, 52) belichtet wird.

17. Verfahren nach Anspruch 16, dadurch gekennzeichnet, daß die strahlenhärtbare Substanz bzw. das strahlenhärtbare Monomer durch gezieltes Aufbringen, beispielsweise Aufsprühen, Aufdrucken usw. auf das Substrat (4) aufgebracht wird.

18. Verfahren nach Anspruch 16, dadurch gekennzeichnet, daß die strahlenhärtbare Substanz bzw. das strahlenhärtbare Monomer auf einen Zylinder (10) mit Oberflächenrelief und nach Aushärtung durch Bestrahlung (52) von dort auf das Substrat (4) aufgebracht wird.

19. Verfahren nach einem der Ansprüche 16 bis 18, dadurch gekennzeichnet, daß das Verfahren einmal oder mehrmals wiederholt wird.

20. Vorrichtung zur Erzeugung einer Oberflächenstruktur, insbesondere einer holographischen Oberflächenstruktur, auf einem Substrat,
bestehend aus einer Aufbringeinrichtung zum Aufbringen einer strahlenhärtbaren Substanz, insbesondere eines strahlenhärtbaren Monomers, entsprechend der zu erzeugenden Oberflächenstruktur (44, 57) auf das Substrat (4) und einer Belichtungseinrichtung (43, 52) zum Belichten der Substanz.

21. Vorrichtung nach Anspruch 20, gekennzeichnet durch einen Zylinder (10).

22. Vorrichtung nach Anspruch 20 oder 21, dadurch gekennzeichnet, daß die Aufbringeinrichtung beispielsweise Inkjet-Düsen (41) zum Aufbringen der strahlenhärtbaren Substanz bzw. des strahlenhärtbaren Monomers auf das Substrat (4) und/oder auf den Zylinder (10) umfaßt.

23. Vorrichtung nach einem der Ansprüche 20 bis 22, dadurch gekennzeichnet, daß mehrere Vorrichtungen hintereinander geschaltet sind.
